Europäisches Patentamt

European Patent Office

Office européen des brevets

(11) Veröffentlichungsnummer: **0 236 969**
**A2**

(12) **EUROPÄISCHE PATENTANMELDUNG**

(21) Anmeldenummer: 87103187.8

(22) Anmeldetag: 06.03.87

(51) Int. Cl.⁴: **H04L 7/04** , H04L 1/24

(30) Priorität: **11.03.86 DE 3608045**

(43) Veröffentlichungstag der Anmeldung:
**16.09.87 Patentblatt 87/38**

(84) Benannte Vertragsstaaten:
**AT BE CH DE FR GB IT LI NL SE**

(71) Anmelder: **Siemens Aktiengesellschaft Berlin und München**
**Wittelsbacherplatz 2**
**D-8000 München 2(DE)**

(72) Erfinder: **Elias, Holger, Dipl.-Ing.**
**Fritz-Baer-Strasse 6**
**D-8000 München 71(DE)**

(54) **Synchronisation von PN-Generatoren hoher Taktfrequenz.**

(57) Zur Synchronisation von Pseudozufallsfolgen-Generatoren hoher Taktfrequenz ist eine bitmäßige Synchronisation und eine sequenzmäßige Synchronisation erforderlich, während die bitmäßige Synchronisation kaum Schwierigkeiten bereitet, ist für die sequenzmäßige Synchronisation ein Phasenschieber erforderlich, der es gestattet, eine der beiden zu synchronisierenden PN-Folgen um Vielfache von 360°, also um ein vielfaches der Bitdauer zu verschieben. Eine erfindungsgemäße Lösung enthält einen Phasenschieber mit drei eingangsseitig miteinander verbundenen Leiterstücken, die Phasenverschiebungen von 120°, 240° und 360° gestatten und deren Ausgänge über gesteuerte Potentiometer mit einer Summierschaltung verbunden sind. Durch diesen Phasenschieber ist es möglich, das einen der beiden zu synchronisierenden PN-Generatoren steuernde Taktsignal und damit die von diesem erzeugte Pulsfolge um Vielfache von 360° zu verschieben.

EP 0 236 969 A2

FIG 4

## Synchronisation von Pseudozufallsfolgen-Generatoren hoher Taktfrequenz

Die Erfindung betrifft ein Verfahren zur Synchronisation von Pseudozufallsfolgen-Generatoren hoher Taktfrequenz sowie einer Anordnung zur Durchführung des Verfahrens.

Pseudozufallsgeneratoren erzeugen eine nahezu zufällige Folge von Impulsen, sie werden auch als Pseudo-Noise-Generatoren oder abgekürzt als PN-Generatoren bezeichnet. Im vorliegenden Falle handelt es sich um PN-Generatoren hoher Taktfrequenz, die zugeführten Taktsignale können dabei Frequenzen von einigen 100 MHz bis über ein GHz aufweisen.

Die Fehlerratenmessung in digitalen Übertragungssystemen erfolgt häufig dadurch, daß eine übertragene Bitfolge, insbesondere eine Pseudozufallsfolge, mit einer lokal erzeugten Bitfolge bzw. Pseudozufallsfolge bitweise verglichen und dabei Fehlerbits ermittelt werden. Besonders problematisch bei hohen Frequenzen ist dabei die Synchronisation des örtlichen PN-Generators, dabei geht es neben der impulsmäßigen Synchronisation insbesondere um die sequenzmäßige Synchronisation hinsichtlich der erzeugten PN-Folge als Voraussetzung für den bitweisen Vergleich.

PN-Generatoren bestehen im Prinzip aus Modulo-2-Addierern und Laufzeitgliedern, wobei von wenigstens zwei Laufzeitglied-Ausgängen Rückführungen auf den Eingang der Laufzeitkette erfolgen. Für die Rückführung werden in der Regel Modulo-2-Addierer in Form von Exklusiv-Oder-Gattern und für die Laufzeitglieder werden getaktete D-Flip-Flops verwendet. Die D-Flip-Flops können zum Teil durch Leiterstücke ersetzt werden, deren Länge so bemessen ist, daß die Impulslaufzeit etwa einer Bitdauer entspricht. Auch diese, als dynamische PN-Generatoren bezeichneten Anordnungen enthalten aber wenigstens ein getaktetes D-Flip-Flop.

Ein bekanntes Verfahren zur Synchronisation zweier PN-Generatoren besteht darin, daß Taktflanken des Bittaktsignals weggelassen werden, das dem örtlichen PN-Generator zugeführt wird. Ein derartiges Verfahren setzt aber voraus, daß alle Laufzeitglieder als D-Flip-Flops realisiert werden, da man nur so durch Weglassen der Taktflanken den momentanen Zustand im PN-Generator "einfrieren" kann, während beim dynamischen PN-Generator die durch die Leiterstücke durchlaufenden Impulse durch Taktsignale nicht beeinflußt werden können. Bei PN-Generatoren höherer Taktfrequenz besteht beim Aufbau mittels diskreter D-Flip-Flops das Problem, daß die Impulslaufzeiten innerhalb der D-Flip-Flops nicht mehr zu vernachlässigen sind. Unter Inkaufnahme eines wesentlich höheren Aufwandes behilft man sich bei derartigen PN-Generatoren damit, daß diese auf dem 1/n-fachen der Taktfrequenz betrieben werden, und die an den Ausgängen der D-Flip-Flops parallel anstehende Information seriell ausgelesen wird.

Die Aufgabe bei der vorliegenden Erfindung besteht also darin, ein Verfahren zur Synchronisation der eingangs erwähnten Art und eine entsprechende Anordnung zur Ausführung dieses Verfahrens zu finden, das bei vergleichsweise geringem Aufwand auch für dynamische PN-Generatoren verwendbar ist und die Laufzeiten innerhalb des PN-Generators nicht wesentlich verändert bzw. nicht wesentlich erhöht.

Erfindungsgemäß wird die Aufgabe durch ein Verfahren der eingangs erwähnten Art gelöst, daß durch die kennzeichnenden Merkmale des Patentanspruchs 1 weitergebildet ist.

Das erfindungsgemäße Verfahren hat den besonderen Vorteil, unabhängig vom Aufbau der zu synchronisierenden PN-Generatoren, also sowohl bei ausschließlich mit D-Flip-Flops bestückten PN-Generatoren, als auch bei dynamischen PN-Generatoren anwendbar zu sein und große Taktphasenänderungen in relativ kurzer Zeit zu ermöglichen.

In den Unteransprüchen ist eine erfindungsgemäße Anordnung zur Durchführung des Verfahrens beschrieben.

Die Erfindung soll im folgenden anhand der Zeichnung näher erläutert werden.

In der Zeichnung zeigt

Fig. 1 die Prinzipschaltung eines Fehlerratenmeßplatzes nach dem Stande der Technik,

Fig. 2 die Prinzipschaltung eines erfindungsgemäßen Phasenschiebers,

Fig. 3a die Schaltung eines erfindungsgemäßen Phasenschiebers,

Fig. 3b die Darstellung der in der Schaltung nach Fig. 3a an den Ausgängen der Leiterstücke auftretenden Spannungen und

Fig. 4 die Schaltung eines erfindungsgemäßen Fehlerratenmeßplatzes.

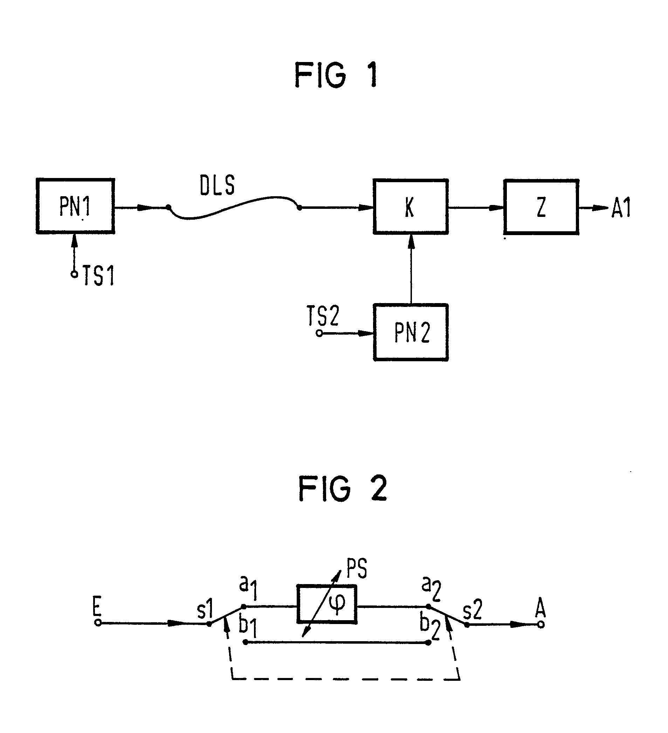

In der Fig. 1 ist ein einleitend bereits beschriebener Fehlerratenmeßplatz dargestellt, der eine digitale Übertragungsstrecke DLS enthält, in die sendeseitig von einem ersten PN-Generator PN1 ein Pseudozufallssignal einge speist wird. Der erste PN-Generator PN1 wird von dem als Sendetakt verwendeten ersten Taktsignal TS1 gesteuert. Empfangsseitig schließt sich an hier nicht dargestellte Anordnungen zur Impulsregeneration und Verstärkung ein Kombinator K an, der eine Anordnung zur Synchronisation und als Modulo-2-Addierer ein Exklusiv-Oder-Gatter enthält. Dem einen Eingang dieses Exklusiv-Oder Gatters wird die empfangene und regenerierte Pseudozufallsfolge zugeleitet, während am anderen Eingang das Ausgangssignal eines zweiten, örtlichen PN-Generators PN2 ansteht. Dieser örtliche PN-Generator wird von einem vorhandenen Systemtakt oder von einem zweiten Taktsignal TS2 gesteuert, das in einem örtlichen Taktgeber erzeugt wird. Zwischen Ausgang des zweiten PN-Generators PN2 und zweiten Eingang des Exklusiv-Oder-Gatters ist dabei die Anordnung zur Synchronisierung eingeschaltet, die die bitmäßige und sequenzmäßige Synchronisation der beiden PN-Generatoren erzeugt. Die Synchronisation kann dabei dadurch erfolgen, daß zunächst sendeseitig eine 1-0-Folge eingespeist und dadurch die Bitsynchronisation hergestellt wird und daß anschließend eine Sequenz mit einer längeren Nullfolge abgegeben wird, wobei das erste, auf die Nullfolge folgende Eins-Bit zum Starten des empfangsseitigen PN-Generators PN2 dient. Der bitweise Vergleich der beiden Pseudozufallsfolgen erfolgt durch die Modulo-2-Addition im Exklusiv-Oder-Gatter, erzeugte Fehlerbits werden einen Fehlerzähler Z zugeführt, der über einen Ausgang A1 eine Auswerteeinrichtung, also eine Anzeige oder einen Drucker steuert.

Entgegen dem Fehlerratenmeßplatz nach dem Stande der Technik wird bei einer entsprechenden erfindungsgemäßen Anordnung die Phase des dem zu synchronisierenden PN-Generators zugeführten Taktsignals entsprechend verschoben. Im Hinblick darauf, daß neben der bitmäßigen Synchronisierung auch eine Sequenzsynchronisierung erforderlich ist, ist ein Phasenschieber erforderlich, der die Phase des Taktsignals um m $\times$ 360°, wobei m eine ganze Zahl größer 0 ist, verschiebt. Dabei muß die Frequenzmodulation des Taktsignals so klein bleiben, daß sich keine Störungen im PN-Generator ergeben, daß dieser insbesondere nicht außer Tritt fällt.

In der Fig. 2 ist die Prinzipschaltung eines erfindungsgemäßen Phasenschiebers dargestellt, der eine Phasenverschiebung des Taktsignals um Vielfache von 360° der Bitperiode ermöglicht. Die Phasenschieberanordnung nach der Fig. 2 enthält einen ersten Schalter S1, der mit dem Eingang für das zu verschiebende Taktsignal verbunden ist und zwei Ausgänge $a_1$, $b_1$ aufweist. Der Ausgang $a_1$ ist über den eigentlichen Phasenschieber PS mit einem ersten Eingang $a_2$ eines zweiten gesteuerten Schalters S2 verbunden, entsprechend ist der Ausgang $b_1$ des ersten gesteuerten Schalters S1 mit einem Eingang $b_2$ des zweiten gesteuerten Schalters S2 verbunden, an dessen Ausgang A das phasenverschobene Taktsignal entnehmbar ist. Bei den gesteuerten Schaltern S1, S2 handelt es sich dem Prinzip nach um ideale Schalter, die so gesteuert werden, daß entweder das Taktsignal über die Anschlüsse $a_1$, $a_2$ oder über die Anschlüsse $b_1$, $b_2$ zum Ausgang gelangt.

Zunächst sollen die Schalter S1, S2 in der gezeichneten Stellung geschaltet sein, während der Phasenschieber PS eine Phasenverschiebung von 0° verursacht. Anschließend wird am Phasenschieber PS die Phase von 0° auf 360° verändert. Dann liegen an den Anschlüssen $a_2$, $b_2$ des zweiten Schalters S2 wiederum zwei, nunmehr aber um eine Phasendrehung von 360° voneinander unterschiedliche Signale an. Anschließend werden die beiden Schalter S1, S2 umgeschaltet, so daß nunmehr das Signal über die b-Anschlüsse weitergeleitet wird. Danach wird die Phasenverschiebung am Phasenschieber PS wieder auf 0° gestellt und die bei den Schalter S1, S2 so umgeschaltet, daß nunmehr das Signal wieder über die Anschlüsse $a_1$, $a_2$ geleitet wird. Diese Verfahrensschritte können beliebig oft wiederholt werden, wobei auch anstelle von einer Phasenverschiebung von 0° von einer solchen von 360° ausgegangen werden kann und dadurch das Taktsignal phasenmäßig nach der anderen Seite verschoben wird.

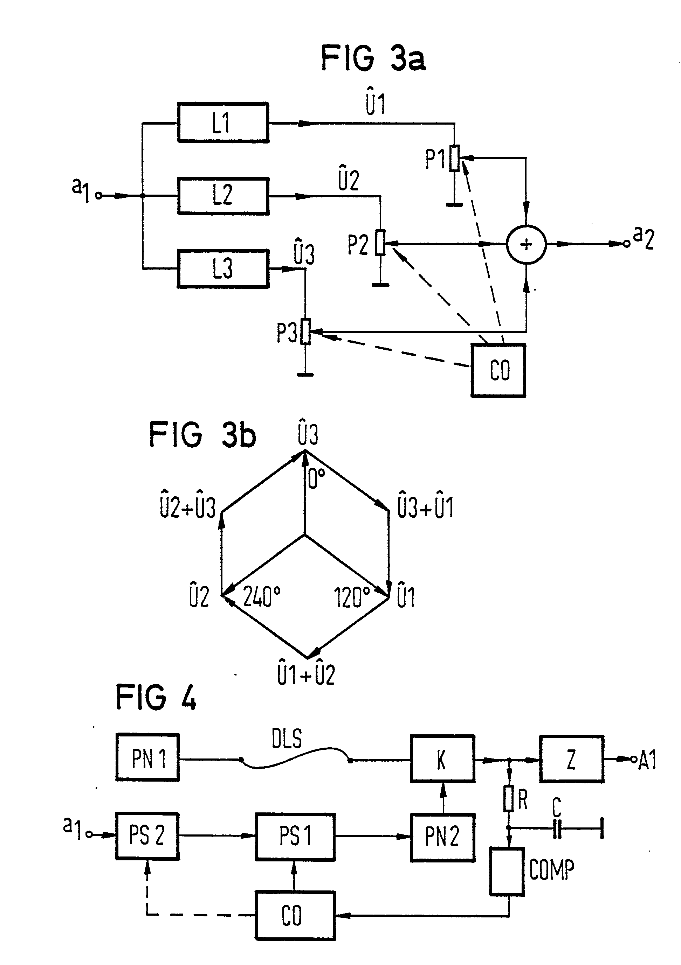

In der Fig. 3a ist eine Möglichkeit der Realisierung des Phasenschiebers PS nach Fig. 2 dargestellt. Um eine Phasendrehung von 360° zu erreichen, werden drei Laufzeitleitungen L1, L2, L3 verwendet, deren Eingängen miteinander und mit dem Ausgangsanschluß $a_1$ des ersten Schalters S1 verbunden sind. Die Ausgangsanschlüsse der drei Laufzeitleitungen L1, L2, L3 sind jeweils getrennt mit Eingangsanschlüssen dreier HF-Pegelregler P1, P2, P3 verbunden, denen die Signale Û1, Û2, Û3 gegen Masse zugeführt werden. Die Abgriffe der HF-Pegelregler sind von einer Steuerschaltung C0 ausgesteuert und jeweils mit einem der drei Eingänge einer Summierschaltung SS verbunden, die eine Linearkombination der drei Teilsignale bewirkt. Bei den HF-Pegelreglern handelt es sich um elektrisch gesteuerte Dämpfungs-bzw. Verstärkungselemente, die in ihrer Funktion Potentiometern entsprechen und beispielsweise durch PIN-Diodendämpfungsglieder, Bipolartransistoren oder Ga AS MES-FET's, deren Gate-Source-Spannung verstellt wird, realisiert werden. Der Ausgang der Summierschaltung SS stellt den Ausgang des Phasenschiebers PS dar, der mit dem Eingangsanschluß A2 des zweiten Schalters S2 verbunden ist. Beim Ausführungsbeispiel werden als HF-Pegelregler Ga-AS-MES-FET's verwendet, deren zusammengeschaltete Drain-Anschlüsse die Summierschaltung ergeben. Die Dimensionierung der Laufzeitleitungen ist so gewählt, daß die erste Laufzeitleitung L1 eine Phasenverschiebung von 120°, die zweite eine Phasenverschiebung von 240° und die dritte eine Phasenverschiebung von 360° bewirkt.

Anstelle der drei Laufzeitleitungen können auch Resonatoren oder andere Laufzeitglieder mit passender Impulslaufzeit verwendet werden.

Zur Erläuterung der Funktion des Phasenschiebers nach der Fig. 3a dient die Vektordarstellung nach der Fig. 3b. In Abhängigkeit von der Steuerschaltung C0 können die HF-Pegelregler so angesteuert werden, daß sich eine Phasenverschiebung von $\pm m \times 360°$ ergibt. Dazu wird zunächst der HF-Pegelregler P1 aufgeregelt, danach P2 und P3. Es ist erkennbar, daß die Phase des am Anschlußpunkt $a_r$ anstehenden Taktsignals entlang der äußeren Berandung der Vektordarstellung in Abhängigkeit von der Stellung der HF-Pegelregler entlangläuft. Zur Synchronisation ist die Steuerschaltung C0 so ausgeführt, daß für eine bestimmte Zeit an jedem Eckpunkt der Vektordarstellung angehalten wird, so daß sich Zeit für die Überprüfung des Synchronismus ergibt, außerdem braucht deshalb der zweite Phasenschieber PS2 nicht den Bereich von 0° bis 360° sondern nur den Bereich von 0° bis 60° zu überdecken. Die Steuerschaltung enthält einen Oszillator, der über einen gesteuerten Schalter mit einem Zähler verbunden ist, der zyklisch über sechs Zustände geschaltet wird. Mit Ausgängen des Zählers ist eine Logikschaltung verbunden, die eine sequentielle Ansteuerung der HF-Regler bewirkt. Zur zeitlichen Begrenzung der Regelgeschwindigkeit sind RC-Glieder in Integratorschaltung zwischen Logikschaltung und Steuereingängen der HF-Regler eingefügt.

Der Phasenschieber nach der Fig. 3a ist Teil des erfindungsgemäßen Fehlerratenmeßplatzes, der in der Fig. 4 dargestellt ist. Im Fehlerratenmeßplatz nach der Fig. 4 ist wiederum der erste sendeseitige PN-Generator PN1 vorgesehen, der über die digitale Übertragungsstrecke DLS ein Pseudozufallssignal an den Kombinator K abgibt, der im Synchronfall bitsynchron und sequenzsynchron vom zwei ten PN-Generator PN2 die gleiche Pseudozufallsfolge erhält und bei der Folge-Modulo-2 addiert. Da sich bei wiederholten modulo-2-Additionen diese aufheben, erscheint zunächst kein Ausgangssignal, lediglich an den Fehlerstellen erscheint ein Fehlerbit, das einem Zähler Z zugeführt wird, der eine Anzeigeeinrichtung A1 steuert. Im vorliegenden Falle ist mit dem Ausgang des Kombinators K für die Fehlerbits über einen Widerstand R ein Kondensator C nach Masse und ein Komparator COMP mit Integratorverhalten verbunden. Der Ausgang des Komparators ist mit einem Eingang der Steuerschaltung C0 verbunden, die entsprechend der Fig. 3a den ersten Phasenschieber PS1 steuert. Der Taktsignaleingang des ersten Phasenschiebers PS1 ist mit dem Ausgang eines zweiten Phasenschiebers PS2 verbunden, der eine zusätzliche Phasenverschiebung des lokalen Bittaktsignals bewirkt, die zur Bitsynchronisation vorgenommen wird und sowohl manuell als auch durch die Steuerschaltung Co getrennt werden kann.

Das RC-Glied wirkt als Integrator und ist so gemessen, daß über mehrere Fehlerbits integriert wird. Oberhalb einer bestimmten Eingangsspannung gibt der nachgeschaltete Komparator ein Startsignal an die Steuerschaltung C0 ab, die daraufhin in vorgeschriebener Weise die Stellung der HF-Pegelregler P1, P2, P3 verändert und dadurch am Ausgangsanschluß der Summierschaltung SS ein Taktsignal abgibt, das zusätzlich zur Phasenverschiebung von 0° bis 60°, die vom zweiten Phasenschieber PS2 verursacht wird, zur sequenzmäßigen Synchronisierung eine Phasenverschiebung von $m \times 360°$ bewirkt. Dadurch verändert sich die sequenzmäßige Phasenlage der vom zweiten PN-Generator PN2 abgegebenen Pseudozufallsfolge, in dieser Pseudozufallsfolge enthaltene Eins-bzw. Null-Impulse werden um m Bitpositionen nach links oder rechts verschoben. Liegt danach ein Synchronismus vor, dann wird die Zahl der Fehlerbits sich drastisch verringern und damit die Spannung am Kondensator C, also die Eingangsspannung für den Komparator COMP. Ab einem bestimmten minimalen Fehlerwert schaltet dieser Komparator COMP seine Ausgangsspannung ab, so daß die Steuerschaltung C0 kein Startsignal mehr erhält und die HF-Pegelregler P1, P2, P3 im Phasenschieber PS1 nach der Fig. 3a in der zuletzt gewählten Stellung fixiert werden. Diese Stellungen werden beibehalten bis eine erhöhte Zahl an Fehlerbits auftritt, durch die der Komparator COMP wieder eingeschaltet wird und ein neuer Synchronisationsvorgang beginnt.

Der Komparator COMP und die Steuerschaltung C0 können in vorteilhafter Weise für eine verglichen zur Bitrate wesentlich niedrigere Arbeitsgeschwindigkeit ausgelegt sein.

**Ansprüche**

1. Verfahren zur Synchronisation von Pseudozufallsfolgengeneratoren (PN-Generatoren) hoher Taktfrequenz,
**dadurch gekennzeichnet,**
daß die Phase des dem zu synchronisierenden PN-Generators zugeführten variablen Taktsignals verschoben wird und daß dazu ein von der Sendeseite übertragenes oder ein lokal erzeugtes Taktsignal in einem ersten Schritt einem einstellbaren Phasenschieber zugeführt wird,

daß in einem zweiten Schritt der einstellbare Phasenschieber und damit die Phase des durchlaufenden Taktsignals mit einer vorgewählten Geschwindigkeit von 0° auf 360° verschoben wird,

daß in einem dritten Schritt das örtlich erzeugte Taktsignal unter Umgehung des einstellbaren Phasenschiebers direkt als variables Taktsignal dient und währenddessen die Phase des einstellbaren Phasenschiebers auf 0° zurückgenommen wird und

daß bis zum Erreichen der gewünschten Phasenverschiebung der erste, zweite und der dritte Schritt beliebig oft wiederholt werden.

2. Fehlerratenmeßplatz zur Durchführung eines Verfahrens nach Anspruch 1, mit einem ersten sendeseitigen PN-Generator (PN1), dem ein erstes Taktsignal (TS1) zugeführt wird, mit einer mit dem Ausgang dieses ersten PN-Generators verbundenen, gegebenenfalls durch eine Nachbildung ersetzten digitalen Übertragungsstrecke (DLS), mit einer Impulsregeneration-und Verstärkungseinrichtung, mit einem Kombinator (K), der eine Synchronisierungseinrichtung für einen zweiten, örtlichen PN-Generator (PN2) enthält, wobei dieser PN-Generator von einem zweiten, Taktsignal (TS2) gesteuert ist und das Ausgangssignal des zweiten PN-Generators (PN2) über einen Eingang des Kombinators zum einen Eingang eines Modulo-2-Addierers gelangt, an dessen anderem Eingang die vom ersten PN-Generator (PN1) erzeugte Pseudozufallsfolge ansteht und mit einem, mit dem Ausgang des Kombinators (K) verbundenem Zähler (Z), an dessen Ausgang (A1) eine Auswerteeinrichtung anschließbar ist,
dadurch gekennzeichnet,
daß mit dem Ausgang des Kombinators (K) über einen Integrator ein Komparator (COMP) angeschlossen ist, das mit dem Ausgang des Komparators (COMP) der Steuereingang einer Steuerschaltung (C0) verbunden ist, die über wenigstens einen Steuerausgang mit wenigstens einem Steuereingang eines gesteuerten Phasenschiebers -(PS1) mit einem Verschiebebereich von einem Vielfachen der Taktperiode verbunden ist, daß der Eingang des ersten Phasenschiebers (PS1) mit einer Quelle für einen Bittakt verbunden ist und daß an den Ausgang des ersten Phasenschiebers -(PS1) der Takteingang eines zweiten, örtlichen PN Generators (PN2) angeschlossen ist.

3. Fehlerratenmeßplatz nach Anspruch 2,
dadurch gekennzeichnet,
daß als Quelle für ein zweites Taktsignal ein örtlicher Taktgenerator vorgesehen ist, dessen Ausgang über einen zweiten gesteuerten Phasenschieber (PS2) mit einer Verschiebemöglichkeit der Taktphase von 0° bis 60° mit dem Takteingang des ersten gesteuerten Phasenschiebers (PS1) verbunden ist.

4. Fehlerratenmeßplatz nach Anspruch 3,
dadurch gekennzeichnet,
daß ein Steuereingang des zweiten gesteuerten Phasenschiebers (PS2) mit einem weiteren Steuerausgang der Steuerschaltung (C0) verbunden ist.

5. Fehlerratenmeßplatz nach einem der Ansprüche 2 bis 5,
dadurch gekennzeichnet,
daß der erste gesteuerte Phasenschieber (PS1) drei Laufzeitglieder, insbesondere Leiterstücke unterschiedlich gewählter Länge und damit unterschiedlicher Verzögerungs zeit enthält, deren Eingänge mit dem Takteingang (a₁) des ersten gesteuerten Phasenschiebers (PS1) verbunden sind und deren Ausgänge jeweils getrennt über zugeordnete, von der Steuerschaltung (C0) gesteuerte HF-Pegelregler (P1, P2, P3) verbunden sind und daß die Ausgänge der HF-Pegelregler jeweils getrennt mit zugeordneten Eingängen einer Summierschaltung (SS) verbunden sind, die eine Linearkombination der Ausgangssignale der HF-Pegelregler bewirkt und an derem Ausgang (a₂) ein phasenverschobenes Taktsignal ansteht.

6. Fehlerratenmeßplatz nach Anspruch 5,
dadurch gekennzeichnet,
daß die drei Leiterstücke Phasenverschiebungen des durchlaufenden Taktsignals von etwa 120°, etwa 240° und etwa 360° einer Bitperiode bewirken.

7. Fehlerratenmeßplatz nach Anspruch 5,
dadurch gekennzeichnet,
daß als gesteuerte HF-Pegelregler GaAS-MESFETs vorgesehen sind und deren zusammengeschaltete Drainanschlüsse die Summierschaltung (SS) darstellen.

# FIG 1

PN1 — DLS — K — Z → A1

TS1

TS2 → PN2

# FIG 2

E — s1 — a1 — PS φ — a2 — s2 — A

b1 — b2

0 236 969

## FIG 3a

## FIG 3b

## FIG 4